# EUROPEAN PATENT SPECIFICATION

(11) **EP 0 773 977 B1**
(45) Date of publication and mention of the grant of the patent: **05.04.2000**
(21) Application number: 95925643.9
(22) Date of filing: 13.07.1995
(51) Int. Cl.: C09D 4/00, C09D 4/06

(54) **COUPLING AGENTS FOR VINYL ETHER-BASED COATING SYSTEMS**
KUPPLUNGSREAGENZIEN FÜR BESCHICHTUNGSSYSTEME, DIE AUF VINYLETHER BASIEREN
AGENTS DE COUPLAGE POUR SYSTEMES DE REVETEMENT A BASE D'ETHER VINYLIQUE

(30) Priority: 13.07.1994 US 274671; 19.08.1994 US 293613; 19.08.1994 US 293869
(43) Date of publication of application: 21.05.1997
(60) Divisional application: 98122515.4
(73) Proprietor: AlliedSignal Inc., Morristown, New Jersey 07962-2245 (US)
(72) Inventor: SWEDO, Raymond, John, Mt. Prospect, IL 60056 (US); GREEN, George, David, Cary, IL 60013 (US); SNYDER, James, Ronald, Chicago, IL 60657 (US)
(74) Representative: Hucker, Charlotte Jane
(86) International application number: US9508790
(87) International publication number: WO9602596

(56) References cited:
- EP-A- 0 305 833
- EP-A- 0 511 860
- EP-A- 0 565 044
- WO-A-93/20155

## Description

### BACKGROUND OF INVENTION

This invention relates to protective or decorative vinyl ether-based coatings for wood, metal, paper, glass, and plastics where it is important to maintain certain properties such as color stability, thermal stability, mechanical stability, hydrolytic stability, and resistance to embrittlement, and to minimize or prevent other properties such as hydrogen generation and blocking.

Coatings containing vinyl ether are known from WO-A-9320155. That Application discloses an acrylate formulation which is cured by a free radical photoinitiator and in which undesirable reactive diluents are replaced with vinyl ether monomers.

An example of the instant invention is an optical fibre coating. Optical fibres are typically coated with a primary coating to cushion against micro-bending and a secondary coating for abrasion resistance. Problems with these coatings include long term stability, hydrogen generation, and "blocking" or fiber-fiber adhesion. Long term stability is important as the intended lifetime of optical fibers is approximately 30 years. Premature failure of the fiber coating cannot be tolerated. It is also important that degradation of the coating does not affect its surface characteristics. This could lead to surface adhesion (blocking) of the coated fibers upon later processing, or fouling of the processing equipment during manufacture. Blocking may also occur after coating because a change in the surface energy over time. The generation of hydrogen is thought to be due to degradation of the coating. Hydrogen then reacts with the glass, resulting in a reduction in light transmission. Another concern is the adhesion (coupling) of the coating to the glass fibers.

### SUMMARY OF THE INVENTION

Coating compositions of the invention comprise a vinyl ether-containing composition polymerizable by actinic, gamma ray, or electron beam radiation comprising: (a) an oligomer or a mixture of oligomers which are monofunctional, multifunctional, or a mixture of both monofunctional and multifunctional and which have a reactive functionality chosen from the group consisting of epoxy, acrylate, vinyl ether, maleate, or mixtures thereof; (b) monomers which are monofunctional, multifunctional, or a mixture of both monofunctional and multifunctional monomers and which have a reactive functionality chosen from the group consisting of epoxy, acrylate, vinyl ether, maleate, or mixtures thereof, wherein at least one of (a) or (b) must contain a vinyl ether functionality; (c) a photoinitiator with an optical sensitizer, said photoinitiator being chosen from the group consisting of a cationic photoinitiator and a radical photoinitiator, and (d) a thermal oxidation stabiliser; (e) a coupling agent comprising a vinyl ether urethane siloxane; and one or more additives selected from the group consisting of: (f) a light screen; (g) a color stabilizer; (h) a blocking stabilizer; and (i) a hydrogen stabiliser.

### DETAILED DESCRIPTION OF THE INVENTION

In the formulae below, where a moiety may be di, tri or tetra-valent, they are defined as, for example, alkyl, aryl, etc which is to be understood as not implying a monovalent group, but a polyfunctional group having the general chemical nature indicated.

### Oligomers (a).

### Polyether Oligomers

Where the oligomers (a) are polyethers, they may be chosen from the group consisting of polyethylene glycol; polypropylene glycol; block or random copolymers of ethylene glycol and propylene glycol; multifunctional phenols which have been derivatized with ethylene oxide, propylene oxide, or random or block copolymers of ethylene and propylene oxides (e.g. 4,4'-iso-propylidene diphenol extended with ethylene oxide); and polytetramethylene glycol. Where the oligomer is a polycarbonate, it may be chosen from the group consisting of poly(hexamethylene glycol. Where the oligomer is a polycarbonate, it may be chosen from the group consisting of poly(hexamethylene carbonate), poly(bisphenol-A carbonate), carbonates derived from multifunctional phenols which have been derivatized with ethylene oxide, propylene oxide, or random or block copolymers of ethylene and propylene oxides. Where the oligomer is a polyalkylene oxide, the oligomer may be chosen from the group consisting of polyethylene oxide, polypropylene oxide, polytetramethylene oxide, and random or block copolymers of thereof.

### Urethane Oligomers

Where the oligomer comprises a urethane, the hydroxyl-terminated macropolyols (i) used to make the oligomer (a) may be chosen from the group consisting of polyester, polyether, polycarbonate, polyalkylene oxides, and diols of alkylene, arylene, aralkylene and cycloalkylene radicals. An example of the polyester structure is: 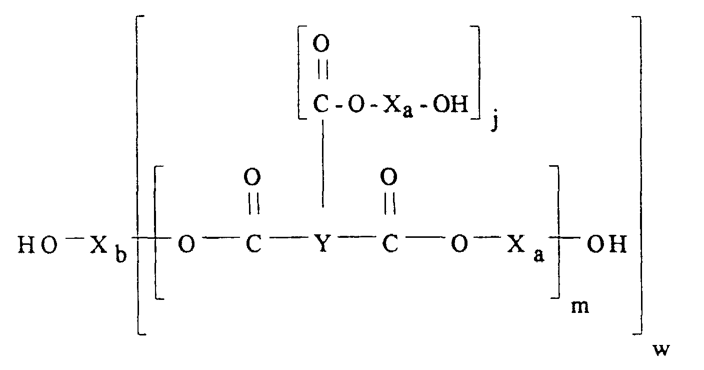 wherein Xₐ, X_{b}, and Y are radicals having a molecular weight of from 25 to about 500, and X_{b}, each Xₐ, and each Y is independently selected from the group consisting of alkyl, aryl, aralkyl and cycloalkyl radicals, j is an integer from 0 to 2, m is an integer from 1 to 100, and w is an integer from 1 to 3. Note that in the instant application, the term "independently selected" means that where there may be more than one variable within brackets which may be substituted, that variable may be selected independently of the same variable within the same brackets, e.g., the two X's in [-O-X-O-]₂, may differ from each other.

Examples of the alkyl moieties for Xₐ, X_{b}, and Y which may be used include saturated aliphatic hydrocarbons based upon methylene (>C<), ethylene (>C-C<), propylene, butylene, pentylene, hexylene, heptylene, octylene, nonylene, decylene, undecylene, dodecylene, tridecylene, tetradecylene, pentadecylene, hexadecylene, heptadecylene, octadecylene, nonadecylene, and eicosylene as well as unsaturated hydrocarbons such as "ethene" (>C=C<), propene, etc., preferably those alkylene groups, containing up to about 20 carbon atoms. Examples of aryl groups include phenylene, naphthylene, anthrylene, phenanthrylene, etc. Cycloalkyl groups include the cyclopentylene, cyclohexylene, cycloheptylene, cyclooctylene, and cycloalkylene groups containing 1 or more alkyl groups on the nucleus. Similarly, the aryl groups which may be used for Y also may contain one or more alkyl groups on the aromatic ring, especially where such alkyl groups contain up to about 6 carbon atoms. Examples of aralkyl groups include benzylene, 1-phenethylene, 2-phenethylene, 3-phenylpropylene, 2-phenylpropylene, 1-phenylpropylene, etc. Particularly useful Y groups are -(CH₂)ₙ- groups where n is 2, 3, or 4, 1,2-, 1,3-, or 1,4-phenylene groups, and 1,4-cyclohexylene groups. Particularly useful X groups are -CH₂CH₂-, -CH₂CH₂-O-CH₂CH₂-, -CH₂-(CH₃)CH-, -(CH₂)ₙ- where n is 4 or 6, -CH₂-(CH₃)₂C-CH₂-, 1,4-phenylene, and 1,2-, 1,3-, and 1,4-xylylene.

Particularly preferred hydroxyl-terminated polyesters include poly(propylene adipate), poly(neopentyl adipate), poly(1,4-butane adipate), poly(1,6-hexane adipate), poly(neopentyl isophthalate), and poly(1,6-hexane isophthalate). The preferred molecular weights for the polyesters will be about 200 to 5000. Polyesters derived from mixed diols or acids may be useful.

Examples of the macropolyol (i) as a hydroxyl-terminated compound are: 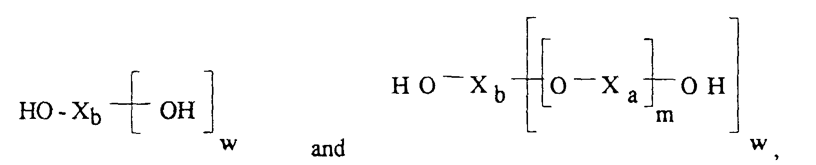 wherein Xₐ and X_{b} are radicals having a molecular weight of from 25 to about 500, and each Xₐ and X_{b} is independently selected from the group consisting of alkyl, aryl, aralkyl and cycloalkyl radicals, m is an integer from 0 to 100, preferably from 0 to 10, and w is an integer from 1 to 3. Preferred structures for Xₐ and X_{b} are the same as those listed for the polyester (i) above.

The diisocyanate (ii) component of the oligomer (a) has the structure: 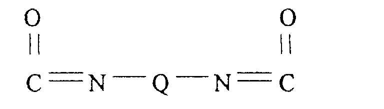 wherein Q is a divalent radical selected from the group consisting of alkylene, arylene, aralkylene, and cycloalkylene radicals.

A broad variety of diisocyanates may be used and may be exemplified by such materials as the toluene diisocyanates (TDI), p- and m-phenylene diisocyanate, 1,4-tetramethylene diisocyanate, 1,6-hexamethylene diisocyanate, 2,2,4-trimethylhexamethylene diisocyanate, 1 4-cyclohexane diisocyanate, 4,4'-dicyclo-hexylmethane diisocyanate (Desmodur® W), 4,4'-diphenylmethane diisocyanate (MDI), 3,3'-dimethyl-4,4-diphenylmethane diisocyanate, 1,5-tetrahydronaphthalene diisocyanate, naphthalene-1,5'-diisocyanate, bis(2-methyl-3-isocyanatephenyl)methane, 4,4'-diphenylpropane diisocyanate, tetramethylxylene diisocyanate (TMXDI), isophorone diisocyanate (IPDI).

Polyisocyanates with a functionality of 2 or more may also be utilized. Examples are those discussed in U.S. Pat. No. 4,433,067, especially the polyisocyanates based on methylenediphenyl diisocyanate, in particular, the 4,4' -isomer and the uretonimine modified MDI as described there. The term polyisocyanate also includes quasi prepolymers of polyisocyanates with active hydrogen containing materials where the polyisocyanate is typically reacted with from about 0.05 to about 0.3 equivalents of a polyol. Although a vast number of polyisocyanates are suitable, in practice polyisocyanates based on MDI and TDI may be preferred for economy and general availability. However, aliphatic isocyanates exhibit non-yellowing properties which are especially important for coatings.

Among the most desirable isocyanates are 4,4'-diphenylmethane diisocyanate, toluene diisocyanate, isophorone diisocyanate, m-tetramethylxylene diisocyanate, 4,4'-dicyclohexylmethane diisocyanate (Desmodur® W), and 1,6-hexamethylene diisocyanate.

The hydroxy-containing functional group polymerizable by actinic, gamma ray, or electron beam radiation (iii) is chosen from the group consisting of epoxy, acrylate, vinyl ether, maleate, or mixtures thereof. Examples of hydroxyl-functionalized epoxides are 1-hydroxy-2,3-epoxy propane and hydroxymethylcyclohexane-3,4-oxide. Examples of hydroxy-functionalized acrylates are hydroxyethyl acrylate, hydroxypropyl acrylate, and other hydroxyalkyl acrylates. Examples of hydroxy-functionalized maleates are bis-hydroxyethyl maleate and other bis-hydroxylalkyl maleates, methyl-2-hydroxymethyl maleate, ethyl-2-hydroxymethyl maleate, and other alkylhydroxyethyl maleates.

When the hydroxy-containing functional group polymerizable by actinic, gamma ray, or electron beam radiation (iii) component of the oligomer (a) is a vinyl ether, it will have the structure: 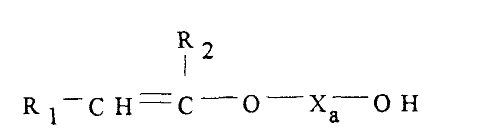 wherein R₁ and R₂ are monovalent radicals selected from the group consisting of hydrogen and alkyl groups having 1 to 10 carbon atoms, preferably from 1 to 4 carbon atoms. It is preferable that both R₁ and R₂ are not alkyl moieties, for in the case where both are lower alkyl groups this causes an undesirable reduction in polymerization rate of the oligomers of our invention. Where R₁ is an alkyl moiety it is preferred that R₂ be hydrogen, and conversely, where R₁ is hydrogen then R₂ should be an alkyl of 1 to 4 carbons. In a preferred embodiment either R₁ or R₂ is a methyl group and the other is hydrogen. In a still more preferred embodiment both R₁ and R₂ are hydrogen.

Xₐ is a divalent radical having a molecular weight in the range of from 25 to about 500 and is independently selected from the group consisting of alkylene, arylene, aralkylene and cycloalkylene radicals. The hydroxy monovinyl ether (iii) can be viewed as the adduct of an alkyne and a diol and may be prepared in that way. However, they can also be made in other ways, and the method of producing them is not part of this invention. The alkyne has the generic formula R₁C≡CR₂, and the diol has the generic formula HO-X-OH.

Examples of the diols are alkylene glycols, HO(CₙH₂ₙ)OH, where n is an integer from 2 to about 10. The linear alkylene glycols, HO(CH₂)ₙOH, (polymethylenediols), where n is an integer from 2 to about 10, are particularly useful, especially where n is from 2 to about 6. Illustrative of the members of this group are such diols as ethylene glycol, 1,3- propylene glycol, 1,4-butanediol, 1,5-pentanediol, 1,6-hexanediol, 1,7-heptanediol, 1,8-octanediol, 1,9-nonanediol, and 1,10-decanediol (decamethylene glycol).

The nonlinear or branched alkylene diols may also be used, where such glycols contain from 3 up to about 10 carbon atoms. Examples include 1,2-propylene glycol, 2,3-butanediol, 2,3-dimethyl-2,3-butanediol, 2,3-dimethyl-1,4-butanediol, 2,2- dimethyl-1,3-propanediol(neopentylglycol).

Another useful class of diols are the polyalkylene glycols, especially poly(ethylene) glycols, HO[-CH₂CH₂O-]ₘOH, and poly(propylene) glycol, HO[-CH(CH₃)CH₂O]ₘOH, where m is an integer from 1 up through about 50, although more usually m is an integer from 1 up to about 10, and most preferably from 1 up to about 5. Examples of these glycols include diethylene glycol, triethylene glycol, tetraethylene glycol, pentaethylene glycol, hexaethylene glycol, etc., along with the analogs of the propylene glycols.

Of particular importance is the case where Xₐ is a divalent radical whose parent is a cycloalkane, such as cyclopentane, cyclohexane, cycloheptane, or cyclooctane, preferably the bis-hydroxy alkyl derivatives. The preferred diols are the 1,3-bis(hydroxyalkyl)cyclopentanes and the 1,4-bis-(hydroxyalkyl)cyclohexanes, -cycloheptanes, and -cyclooctanes, particularly the cyclohexanes. Diols substituted at positions different from those specified above may be used in the practice of this invention, but not necessarily with equivalent results. The bis-(hydroxymethyl)cyclohexanes are preferred as they are readily available from the reduction of the corresponding phthalic acids, and among these 1,4-bis-(hydroxymethyl)cyclohexane is favored.

Of the hydroxy monovinyl ethers (iii) which are produced by the reaction of acetylene with the diols described above, those which are especially preferred include 4-hydroxybutyl vinyl ether (HBVE), 4-hydroxymethyl cyclohexylmethyl vinyl ether (CHMVE), 2-hydroxy ethyl vinyl ether, triethylene glycol monovinyl ether, and diethylene glycol monovinyl ether.

The urethane oligomer (a) may be formed by reacting the hydroxyl-terminated macropolyol (i) with the isocyanate compound (ii) or by reacting the isocyanate (ii) with the hydroxy-containing functional group polymerizable by actinic, gamma ray, or electron beam radiation (iii) and thereafter reacting the adduct with the remaining component or alternatively, the three components may be co-reacted. The ratios of (i), (ii), and (iii) will be chosen so that the ratio of the total number of hydroxyl groups from (i) and (iii) to the number of isocyanate groups from (ii) is about 1:1. The ratio of the number of hydroxyl groups from (i) to the number of hydroxyl groups from (iii) should be in the range from about 0.5 to 10.

An important characteristic of urethane oligomers (a) is that in all cases there are few hydroxyl groups derived from the macropolyol (i) or hydroxy-containing functional group polymerizable by actinic, gamma ray, or electron beam radiation (iii) in the final product. That is, less than about 10% of the initial hydroxyl groups remain unreacted. It is most preferable that the oligomeric product contain no detectable free hydroxyl groups, i.e., less than about 1% of the initial hydroxyl groups of the reactant mixture remain unreacted. It is also important that there should be essentially no free isocyanate groups remaining in the product, that is, less than about 1% of the initial isocyanate groups of the reactant mixture.

The reaction may be carried out at temperatures in the range of 0°C to 150°C. Solvents such as diethyl ether, methylene chloride, or toluene may be employed and later removed from the oligomers, or the components may be reacted in the absence of solvents. Divinyl ether monomers such as 1,4-cyclohexane dimethanol divinyl ether or triethylene glycol divinyl ether may also be used as solvents. Such compounds may be obtained as by-products in the preparation of hydroxy monovinyl ethers. Since they have no free hydroxyl groups they do not react with the isocyanates, but may remain with the oligomers in the formulations of coatings.

The reaction may be carried out without a catalyst, however, any of the conventional catalysts may be used, e.g., dibutyl tin dilaurate.

### Polyester Oligomers

Where the oligomer (a) comprises a polyester, it is the reaction product of (i) a polyol containing at least two terminal and/or pendant hydroxyl groups, (ii) a polybasic ester, and (iii) a hydroxy-containing functional group polymerizable by actinic, gamma ray, or electron beam radiation chosen from the group consisting of epoxy, acrylate, vinyl ether, maleate, or mixtures thereof. Examples of the polyol (i) structure are the hydroxyl-terminated polyether: 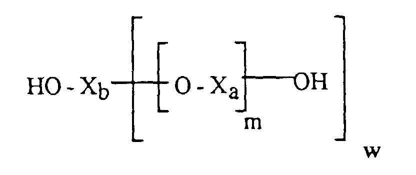 wherein Xₐ and X_{b} are radicals having a molecular weight of from 25 to about 500, and each Xₐ and Xb is independently selected from the group consisting of alkyl, aryl, aralkyl and cycloalkyl radicals, m is an integer from 0 to 100, preferably 0 to 10, and w is an integer from 1 to 3 indicating the number of additional substituents of X_{b}. Preferred structures for Xₐ and X_{b} are the same as those listed for the polyester (ii) below.

An example of the polybasic ester (ii) structure is: 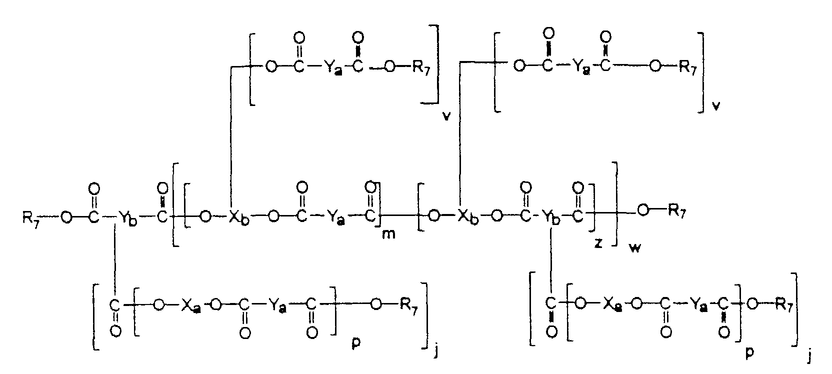 wherein R₇ is chosen from the group consisting of phenyl and an alkyl group containing from 1 to 6 carbons, Xₐ, X_{b}, Yₐ, and Y_{b} are radicals having a molecular weight of from 25 to about 500, each Xₐ, each X_{b}, each Yₐ, and Y_{b} being independently selected from the group consisting of alkyl, aryl, aralkyl and cycloalkyl radicals, j, z, p, and v are integers from 0 to 2, and m is an integer from 0 to 100, preferably 0 to 10. W is 1 or 2 with the proviso that m and z may not both be zero.

Examples of the hydroxy-containing functional group (iii) are 1-hydroxy-2,3-epoxy propane, hydroxymethylcyclohexane-3,4-oxide, hydroxyethyl acrylate, hydroxypropyl acrylate, bis-hydroxyethyl maleate, methyl-2-hydroxymethyl maleate, and ethyl-2-hydroxymethyl maleate. Examples of the structure of (iii) are: 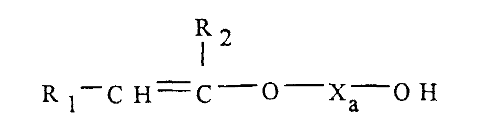 wherein R₁ and R₂ are monovalent radicals selected from the group consisting of hydrogen and alkyl groups having 1 to 10 carbon atoms. Preferably, R₁ is an alkyl group having 1 to 4 carbon atoms and R₂ is hydrogen or R₁ is hydrogen and R₂ is an alkyl group having 1 to 4 carbon atoms. Most preferably, both R₁ and R₂ are hydrogen. Xₐ is a divalent radical having a molecular weight in the range of from 25 to about 500 and is independently selected from the group consisting of alkylene, cycloalkylene, and alkylene ether radicals.

**Monomers (b).** in addition to the oligomer, the coating of the instant invention also comprises monomers (b) which may be monofunctional monomers, multifunctional monomers, or a mixture of both monofunctional and multifunctional monomers. The monomers have a reactive functionality chosen from the group consisting of epoxy, acrylate, vinyl ether, maleate, or mixtures thereof, wherein at least one of (a) or (b) must contain a vinyl ether functionality. An example of a vinyl ether terminated ester monomer is: 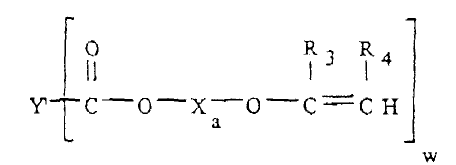 wherein w is an integer from 1 to 4 indicating the number of substitutents of Y', Y' is a mono-, di-, tri-, or tetrafunctional radical having a molecular weight of 15 to 500 and is independently selected from the group consisting of alkyl, aryl, aralkyl, and cycloalkyl radicals, Xₐ is a divalent radical having a molecular weight of 25 to 500, each Xₐ being independently selected from the group consisting of alkylene or cycloalkylene radicals, and R₃ and R₄ are monovalent radicals which are independently selected from the group consisting of hydrogen and alkyl groups having 1-10 carbon atoms, preferably independently selected from the group consisting of hydrogen and methyl.

An example of a vinyl ether terminated ether monomer is: 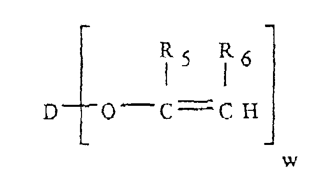 wherein w is an integer from I to 4 indicating the number of substituents of D, R₅ and R₆ are monovalent radicals which are independently selected from the group consisting of hydrogen and alkyl groups having 1-10 carbon atoms preferably independently selected from the group consisting of hydrogen and methyl, and D is a mono-, di-, tri-, or tetravalent radical consisting of alkyl, cycloalkyl, or aryl ethers having a molecular weight of 56 to 1000.

Typical divinyl ether compounds of particular usefulness are 1,4-cyclohexane dimethanol divinyl ether, dipropylene glycol divinyl ether, tripropylene glycol divinyl ether, triethylene glycol divinyl ether.

Such compounds may be prepared conveniently by reacting acetylene with diols such as 1,4-cyclohexane dimethanol, dipropylene glycol, tripropylene glycol, and diethylene glycol.

Monofunctional compounds may also be used and these may be prepared by reacting acetylene with monoalcohols such as cyclohexanol, diethylene glycol monobutyl ether, ethylene glycol monohexyl ether, dipropylene glycol monomethyl ether, and ethylene glycol-2-ethyl hexyl ether.

Typical monofunctional vinyl ethers include cyclohexyl vinyl ether, n-butyldiethoxy vinyl ether, n-hexylethoxy vinyl ether, methyl dipropylene glycol vinyl ether, and 2-ethylhexylethoxy vinyl ether.

**Photoinitiator (c).** The photoinitiator (c) which may be chosen from the group consisting of a cationic photoinitiator and a radical photoinitiator, may be added with a sensitizer if necessary. Examples of cationic photoinitiators are triarylsulfonium salts or diaryliodonium salts having non-nucleophilic anions such as hexafluorophosphate (also known as Cyracure® UVI-6990), hexafluoroantimonate (also known as UVI-6974), tetrafluoroborate, and hexafluoroarsenate. Examples of radical photoinitiators are benzoin ethers, acyl phosphine oxides, acyl ketals, and other radical photoinitiators known in the art. The photo-initators are usually required in amounts from about 0.1 to 5 wt.% in the blended formula of vinyl ethers and may comprise mixtures of different triarylsulfonium or diaryliodonium salts having different non-nucleophilic anions associated with them. Examples of sensitizers are benzophenone, thioxanthone, phenanthrene, anthracenemethanol, isopropylthioxanthone, and perylene. Radiation activated cationic initiators have been reviewed by J. V. Crivello, Advances in Polymer Sci, 64, pp. 1-48 (1984).

**Thermal Oxidation Stabilizer (d).** The thermal oxidation stabilizer may be present in the coating in an amount up to about 5 wt.%, preferably in the range of from about 0.25 wt.% to about 3.0 wt.%. Examples are hindered phenolic antioxidants such as octadecyl 3-(3',5'-di-tert-butyl-4'-hydroxyphenyl)propionate (Irganox® 1076), tetrakis [methylene (3,5-di-tert-butyl-4-hydroxyhydrocinnamate)]methane (Irganox® 1010), and benzene propanoic acid, 3,5-bis-(1,1-dimethylethyl)-4-hydroxy-,thiodi-2,1-ethanediyl ester (Irganox® 1035). Examples of stabilizers which are not hindered phenolic antioxidants are N,N'-(2-naphthyl)-phenylenediamine (AgeRite® White) dilaurylthiodipropionate (Irganox® PS800), and p,p'-2-(2-phenylpropyldiphenylamine (Naugard® 445).

**Hydrogen Stabilizer (i).** The generation of hydrogen by polymers is a problem which is especially acute in coatings for optical fibers since the hydrogen can react with the surface of the glass fibers and create signal attenuation. Consequently, standards for hydrogen generation are very stringent.

Preferably, the amount of hydrogen generated in a high temperature test to be described below is 1.0 µL/g of polymer or lower, particularly 0.3 µL/g or below. The reason hydrogen generation occurs is not fully understood at this time. We believe that the hydrogen generation process involves the presence of hydroperoxide intermediates formed by the reaction of the organic compounds present in the coatings with oxygen. This may be accelerated by the radicals generated by decomposition of the photoinitiators during curing of the coating formulations. We believe that the three classes of compounds discussed below all have the effect of destroying hydroperoxides and/or trapping radicals and consequently limit the decomposition reactions which result in hydrogen formation.

The following have been found useful as hydrogen stabilizers-hindered phenolic antioxidants, nitrogen-based stabilizers, aliphatic sulfides, aliphatic disulfides, aliphatic polysulfides, aromatic sulfides, aromatic disulfides, aromatic polysulfides, mixed aliphatic/aromatic sulfides, mixed aliphatic/ aromatic disulfides, mixed aliphatic/aromatic polysulfides, aliphatic nitro compounds, and aromatic nitro compounds.

We have found that another class of compounds should also be included, namely transition metal salts or complexes of organic compounds, and further that when these later compounds are combined with organic sulfides or disulfides and hindered phenols marked reduction in the hydrogen generation is obtained. When the use of these three synergistic materials is combined with low radiation doses and elevated temperatures the cured polymers are able to achieve the very low levels of hydrogen generation required for optical fiber coatings, or in any other service where hydrogen generation is a concern. The benefits of these discoveries will be demonstrated in the examples below.

As previously mentioned, examples of hindered phenolic antioxidants are Irganox® 1076 (octadecyl 3-(3',5'-di-tert-butyl-4-hydroxyphenyl)propionate, Irganox® 1010 (tetrakis[methylene (3,5-di-tert-butyl-4-hydroxyhydrocinnamate)]methane, and Irganox® 1035 (benzene propionic acid, 3,5-bis-(1,1-dimethylethyl)-4-hydroxy-,thiodi-2,1-ethanediyl ester. Examples of aliphatic sulfides are dodecyl sulfide, octyl sulfide, octadecyl sulfide, sec-octylsulfide, t-butyl sulfide, dilaurylthiodipropionate. Examples of aliphatic disulfides are dodecyl disulfide, octyl disulfide, octadecyl disulfide, sec-octyl disulfide, t-butyl disulfide, and dilaurylthiodipropionate. Examples of aromatic sulfides are phenyl sulfide, benzyl sulfide, tolyl sulfide, and 6-hydroxynaphthyl sulfide. Examples of aromatic disulfides are phenyl disulfide, benzyl disulfide, tolyl disulfide, and 6-hydroxynaphthyl disulfide.

The transition metal salts of organic compounds are generally the metal salts of organic acids, such as acetic acid, 2-ethylhexanoic acid, naphthoic acid, cyclohexane butyric acid, or complexes, such as acetylacetonate or arene complexes. Compounds which have been found to be useful include metal salts of naphthenate octoate, 2-ethyl hexanoate, and cyclohexane butyrate. The transition metals of particular usefulness include cobalt, manganese, copper, nickel, and zinc.

The amounts of hydrogen stabilizers required are small, generally less than 5 wt.% in the polymer formulation before it is cured. The hindered phenols and sulfides are used in amounts of up to 5 wt.%, preferably about 0.1 to 3 wt.%. The transition metal salts are usually used in smaller quantities, generally about 0.0001 to 0.5 wt.%, preferably about 0.001 to 0.05 wt.%.

**Light Screen (f).** The light screen may be present in the coating at a range of 0 to 5 wt.%. Examples of light screens include benzotriazole derivatives and aromatic esters such as Cyasorb® 2908 (2,6-di(t-butyl)-p-hydroxybenzoic acid, hexadecyl ester), aryl salicylate esters, and esters of 2-cyano-3,3-diphenyl-acrylic acid.

**Color Stabilizer (g).** The color stabilizer may be present in the coating at a range of 0 to 5 wt.%. Examples of color stabilizers are carbamates such as N,N-dicarbomethoxybenzidine and blocked amines such as Tinuvin® 440 (8-acetyl-3-dodecyl-7,7,9,9-tetramethyl-1,3,8-triazaspiro-(4,5)-decane-2,4-dione).

**Blocking Stabilizer (h).** The blocking stabilizer may be present in the coating at a range of 0 to 5 wt.%. of the secondary coating. Examples of blocking stabilizers are carnauba wax, polyether silicone copolymers such as SF 1188, fluorinated copolymers, micronized polyethylene waxes, and micronized celluloses.

**Coupling Agent (e).** Substituted trialkoxy silanes have been used to improve the adhesion of polymers to glass. However, they have been found to fall short of the desired performance for vinyl ether-based formulations in premium applications such as for optical fiber coatings, especially where water or high humidity are present. There are other disadvantages to the use of the trialkoxy silanes. First, they are relatively volatile and have an unpleasant odor. Also, it is necessary to use undesirably large amounts in order to obtain adequate coupling of the polymers to glass. Finally, these coupling agents have a tendency to reduce the curing speed of the coating formulations, which is clearly undesirable.

We have now found that vinyl ether urethane siloxanes provide improved coupling agents. These compounds generally have lower volatility and less odor than the trialkoxy silanes used heretofore. By having vinyl ether groups, they are easily compatible with the vinyl ether coating formulations. In addition, and most important they are more effective than the trialkoxy silanes under moist conditions.

The new vinyl ether urethane siloxane of the coupling agent may be produced by the reaction of hydroxy monovinyl ethers with trialkoxy silanes which have an isocyanate functionality. Typical but not limiting monovinyl ethers are 4-hydroxybutyl vinyl ether, 2-hydroxyethyl vinyl ether, hydroxymethyl cyclohexyl methyl vinyl ether, 6-hydroxyhexyl vinyl ether and diethylene glycol mono vinyl ether. Isocyanate functionalized silanes include for example, isocyanatopropyl triethoxysilane. Still other vinyl ether siloxane coupling agents may be derived from the reaction products of 1) trialkoxy silane with allyl vinyl ethers, or 2) trialkoxy chlorosilanes with hydroxy vinyl ethers.

**Coating Preparation.** Protective or decorative vinyl ether-based coatings for wood, metal, paper, glass, and plastics should maintain properties such as color stability, thermal stability, mechanical stability, hydrolytic stability, and resistance to embrittlement, and to minimize or prevent other properties such as hydrogen generation and blocking.

One such application requiring maintenance of such properties is the use of these coatings in optical fiber preparation. Optical coatings are sometimes applied in two layers, the inner being much different in physical properties than the outer. The inner or primary coating is softer and more elastic than the outer or secondary coating, which is intended to provide a tough barrier able to protect the inner coating and the glass fiber beneath it. Although the formulations used by the present inventors for the inner and outer coatings are selected from the same families of vinyl ether compounds, quite different properties can be obtained. Also, it is an advantage to the formulator that both layers are chemically related in that cure, wettability, and adhesion are improved.

One such application requiring maintenance of such properties is the use of these coatings in optical fiber preparation. Optical coatings are sometimes applied in two layers, the inner being much different in physical properties than the outer. The inner or primary coating is softer and more elastic than the outer or secondary coating, which is intended to provide a tough barrier-able to protect the inner coating and the glass fiber beneath it. Although the formulations used by the present inventors for the inner and outer coatings are selected from the same families of vinyl ether compounds, quite different properties can be obtained. Also, it is an advantage to the formulator that both layers are chemically related in that cure, wettability, and adhesion are improved. The formulations are prepared so that they have a viscosity of about 100 to 1000 cPs (mPa•s) at the application temperature (about 20° to 100°C). The cured coating requires physical properties consistent with their function, for the primary layer the glass transition temperature (Tg) should be at or below 0°C and have a modulus of 80-800 psi (551 - 5510 kPa) at room temperature with an elongation greater than 50%. The secondary layer should have a cured Tg greater than 50°C, a cured modulus of at least 50,000 psi (344.7 MPa) at room temperature and an elongation greater than 5%.

In general, a primary optical fiber coating comprises a vinyl ether-containing composition polymerizable by actinic, gamma ray, or electron beam radiation. This composition comprises a resin mixture, a photoinitiator, a thermal oxidation stabilizer, and additives, said resin mixture comprising oligomer (a) and monomers (b), wherein oligomer (a) comprises from about 5 to 95 wt% of the resin mixture and monomers (b) comprise about 5 to 95 wt% of the resin mixture, and wherein the amounts of the remaining components are based upon the resin mixture: the photoinitator (c) comprises from about 0.1 to 5 wt% based upon the weight of the resin mixture, the thermal oxidation stabilizer (d) comprises 0.1 to 5 pph, and the additives are a hydrogen stabilizer (i) comprising 0 to 5 pph, a light screen (f) comprising 0 to 5 pph, a color stabilizer (g) comprising 0 to 5 pph, and a coupling agent (e) comprising 0 to 5 pph.

A secondary optical fiber coating comprises a vinyl ether-containing composition polymerizable by actinic, gamma ray, or electron beam radiation. This composition comprises a resin mixture, a photoinitiator, a thermal oxidation stabilizer, and additives, said resin mixture comprising oligomer (a) and monomers (b), wherein oligomer (a) comprises from about 5 to 95 wt% of the resin mixture, monomers (b) comprise about 5 to 95 wt% of the resin mixture, and wherein the amounts of the remaining components are based upon the resin mixture: the photoinitator (c) comprises from about 0.1 to 5 wt% based upon the weight of the resin mixture, the thermal oxidation stabilizer (d) comprises 0.1 to 5 pph, and the additives are the hydrogen stabilizers of the invention (e) comprising 0 to 5 pph, a light screen (f) comprising 0 to 5 pph, a color stabilizer (g) comprising 0 to 5 pph, and a blocking stabilizer (h) comprising 0 to 5 pph.

The coatings and the oligomers are cured using actinic, gamma ray, or electron beam radiation. Electron beam curing may be performed advantageously in the presence of an iodonium or a sulfonium salt to afford high speed cationic polymerization. Ultraviolet curing in the presence of an onium salt also may be used to produce cationic polymerization. The ultraviolet radiation from a mercury vapor lamp is commonly used. Other means include thermal curing in the presence of a Lewis acid, such as boron trifluoride, or in the presence of a strong acid such as p-toluenesulfonic acid and trifluoromethylsulfonic acid. Latent thermal catalysts which release a strong acid upon heating, e.g., blocked sulfonic acid may also be used. All these methods of polymerization are well known to those skilled in the art. Cationic polymerization in the presence of ultraviolet radiation is preferred for curing of the coatings for optical fibers. Curing by radical polymerization may be induced by electron, gamma, or actinic radiation. Curing of a mixed vinyl ether/acrylate or vinyl ether maleate system in the presence of a radical initiator may be performed by ultraviolet, electron beam, or gamma irradiation. A dual initiator system, i.e., having both radical and cationic initiators, can also be used.

### Example I - Vinyl Ether Urethane Siloxane Coupling Agents

Three vinyl ether urethane siloxanes were made by the following method. A 100 mL 3-neck flask was equipped with a magnetic stir bar, a thermometer, and an N₂ bubbler. The flask was charged with 27.29 (0.11 moles) of 3-isocyanatopropyl triethoxysilane and 18.78 g (0.11 moles) of hydroxymethyl cyclohexylmethyl vinyl ether. The resulting mixture was stirred under N₂, and the flask was cooled in an ice bath. To the mixture were added two drops of dibutyl tin diacetate. Within a few seconds, the temperature of the mixture began to rise, reaching about 65°C after about 10 minutes. The temperature began to decrease almost immediately. When the temperature reached about 40°C, the ice bath was removed, and the reaction mixture was stirred at room temperature for 1 hour. At this time, IR analysis showed that all of the isocyanate group had been reacted. The resulting vinyl ether urethane siloxane was a mobile liquid with a slight but pleasant odor.

Other catalysts for the generation of urethanes could be employed as well, and solvents can be used when solid reactants or products are used or anticipated

Two additional vinyl ether urethane siloxanes were made by the same method described above using 4-hydroxy butyl vinyl ether (HBVE) and 2-hydroxy ethyl vinyl ether (HEVE).

The performance of these new adhesion promoters will be shown in the examples below.

### Example II - Vinyl Ether Oligomers for a Glass Adhesion (Coupling) Tests

### Urethanes

Two vinyl ether-capped urethane oligomers were made and then equal weights were blended for use in mixing optical fiber coatings in the examples below.

The first oligomer was prepared by reacting 17.752 equivalents of Witco Formrez 33-56 (OH equivalent weight 1011.9) with 35.503 equivalents of BASF methylene diisocyanate (NCO equivalent weight 125.37) using dibutyltin diacetate as the catalyst, then end-capping with 17.752 equivalents of ISP CHMVE (cyclohexanedimethanol monovinyl ether, OH equivalent weight 170). The second oligomer was prepared by reacting 17.64 equivalents of Witco Formrez 33-56 (OH equivalent weight 1011.9) with 35.29 equivalents of BASF MP-102 diisocyanate (NCO equivalent weight 185.02) using dibutyltin diacetate as the catalyst, then end-capping with 17.64 equivalents of ISP CHMVE (OH equivalent weight 170). For the purposes of this investigation, equal weights of these two products were blended together. The resulting urethane oligomer blend was designated as VEU.

### Esters

Two vinyl ether-capped ester oligomers were made as described below, and were used individually to prepare optical fiber coatings in the examples below.

The first oligomer was prepared by the trans-esterifacation reaction of 22.92 moles of dimethyl isophthalate (Morflex® 1129) with 17.32 moles of polyTHF-250 (BASF) and 3.05 moles of BHTD (4,8-bis(hydroxymethyl)tricyclo-[5.2.1.0^{2,6}]decane, Aldrich) using dibutyltin diacetate as the catalyst, followed by end-capping with HBVE (4-hydroxybutyl vinyl ether, ISP). The resulting ester oligomer was designated as VEE-1.

The second oligomer was prepared by the trans-esterification reaction of 25.02 moles of dimethyl isophthalate (Morflex® 1129) with 17.41 moles of polyTHF-250 (BASF), 0.64 moles of polyTHF-650 (BASF), and 3.97 moles of BHTD (Aldrich) using dibutyltin diacetate as the catalyst, followed by end-capping with HBVE (ISP). The resulting ester oligomer was designated as VEE-2.

### Example III - Optical Fiber Coatings for Glass Adhesion (Coupling) Tests

Three optical fiber coatings were formulated for adhesion testing using the urethane and ester oligomers made in Example II. These coatings were as follows:

| Formulation A | |
|---|---|
| COMPONENT | WT% (PPH) |
| VEU | 69 |
| PolyTHF divinyl ether^{(a)} | 9 |
| VEX 3010^{(b)} | 10 |
| 2-Ethylhexyl vinyl ether^{(c)} | 12 |
| Irganox® 1076^{(d)} | (1.0) |
| UVI-6990^{(e)} | (0.75) |
| Coupling agent (as specified) | (1.0) |

| Formulation B | |
|---|---|
| COMPONENT | WT.% (PPH) |
| VEE-1 | 80 |
| VEctomer 4010^{(f)} | 15 |
| VEX 3010^{(b)} | 5 |
| Dodecyl sulfide | (0.5) |
| Coppery 2-ethylhexanoate | (0.0025) |
| Irganox® 1076^{(d)} | (2.0) |
| UVI-6974^{(g)} | (0.8) |
| Coupling agent (as specified) | (as specified) |

| Formulation C | |
|---|---|
| COMPONENT | WT% (PPH) |
| VEE-2 | 80 |
| VEctomer 4010^{(f)} | 15 |
| VEX 3010^{(b)} | 5 |
| Dodecyl sulfide | (0.5) |
| Copper(II) 2-ethylhexanoate | (0.0025) |
| SF1188^{(h)} | (0.5) |
| UVI-6974^{(g)} | (as specified) |
| Irganox 1076^{(d)} | (2.0) |

| | |
|---|---|
| (a) poly tetrahydrofuran divinyl ether (ISP) (b) reaction product of HBVE and methyl benzoate (AlliedSignal) | |
| (c) supplied by ISP (d) octadecyl-3-(3',5'-ditertbutyl-4'-hydroxyphenyl)propionate (Ciba-Geigy) | |
| (e) triaryl sulfonium hexafluorophosphate (Union Carbide) (f) reaction product of 4-hydroxy butyl vinyl ether and dimethylisophthalate (AlliedSignal) | |
| (g) triaryl sulfonium hexafluoro antimonate (Union Carbide) | |
| (h) silicone fluid (Dow Corning) | |

Formulations A, B, and C were combined with a coupling agent selected from the following group and then tested for adhesion.
- E6250: 2-(3,4-epoxycyclohexyl)ethyl trimethoxysilane (Huls)
- M8550: 3-methacryloxypropyl trimethoxysilane (Huls)
- G6720: 3-glycidoxypropyl trimethoxysilane (Huls)
- G6710: (3-glycidoxypropyl)methyl diethoxysilane (Huls)
- A0564: allyl triethoxysilane (Huls)
- V4910: vinyl triethoxysilane (Huls)
- HBVE/Si: AlliedSignal, reaction product of 3-isocyanatopropyl triethoxysilane with 4-hydroxybutylvinyl ether
- HEVE/Si: AlliedSignal, reaction product of 3-isocyanatopropyl triethoxysilane with 2-hydroxyethylvinyl ether
- CHMVE/Si: AlliedSignal, reaction product of 3-isocyanatopropyl triethoxysilane with cyclohexanediethanol monovinyl ether
- HDMVE/Si: AlliedSignal reaction product of 3-isocyanatopropyl triethoxysilane with 6-hydroxyhexylvinyl ether

Thin films (ca. 38 µm) of the resin formulations were applied to clean glass plates. The formulations were cured by exposure to UV light using a Fusion Systems photocuring unit with 300 W/2.54 cm (300 watt/inch) H-bulbs. The cure dose was varied as indicated in the Examples, and was controlled by varying the conveyor speed.

After the resin formulations were cured, their adhesion to the glass plates was evaluated by 180° peel testing at 25.4 cm/min (10 inches/minute). The cured test plates were exposed to various environments before adhesion was evaluated:
- Ambient Conditions:: Samples were evaluated after allowing the cured formulations to equilibrate to ambient temperature and humidity for at least 1 day.
- 95% RH:: Samples were evaluated after allowing the cured formulations to equilibrate in a 95% RH chamber at room temperature for at least 1 day.
- Immersion:: Samples were evaluated after being immersed in water at room temperature for the amount of time specified.

The following examples demonstrate the effectiveness of using vinyl ether derivatized siloxane coupling agents to improve adhesion of vinyl ether based formulations to glass under a variety of environmental conditions. The effects of varying curing conditions (photocationic initiator concentration, cure dose, and cure temperature) are also explored.

These examples are not intended to be in any sense limiting as to the application of vinyl ether derivatized siloxane coupling agents. It is anticipated that this new class of coupling agents could find application to other cationically cured resin formulations - such as epoxy resins or vinyl ether maleates. It is also anticipated that these coupling agents can improve adhesion of cationically cured resin formulations to other substrates - such as metals, wood, and paper - although not necessarily with the same degree of effectiveness. Finally, it is also anticipated that these new vinyl ether derivatized siloxane coupling agents can be used in concert with other commercially available siloxane coupling agents to achieve desired adhesion properties, providing that these commercially available coupling agents do not interfere with vinyl ether curing or formulation stability.

### Example IV - Comparative

Commercially available coupling agents selected from those listed above were added (at 1 pph) to formulation A (urethane based) and cured to determine their effect on curing at ambient temperatures. The results are given in the following table.

**Table 1**

| **SAMPLE** | **COUPLING AGENT** | **CURE DOSE mJ/CM**^{**2**} | **RESULTS** |
|---|---|---|---|
| 1 | (NONE) | 100 | FULLY CURED |
| 2 | (NONE) | 250 | FULLY CURED |
| 3 | (NONE) | 500 | FULLY CURED |
| | | | |
| 4 | E6250 | 100 | DID NOT CURE |
| 5 | E6250 | 250 | DID NOT CURE |
| 6 | E6250 | 500 | NOT FULLY CURED |
| | | | |
| 7 | M8550 | 100 | DID NOT CURE |
| 8 | M8550 | 250 | FULLY CURED |
| 9 | M8550 | 500 | FULLY CURED |
| | | | |
| 10 | G6720 | 100 | DID NOT CURE |
| 11 | G6720 | 250 | FULLY CURED (DISCOLORED) |
| 12 | G6720 | 500 | FULLY CURED (DISCOLORED) |
| | | | |
| 13 | G6710 | 100 | DID NOT CURE |
| 14 | G6710 | 250 | FULLY CURED (DISCOLORED) |
| | | | |
| 15 | A0564 | 100 | DID NOT CURE |
| 16 | A0564 | 250 | FULLY CURED |
| 17 | V4910 | 100 | DID NOT CURE |
| 18 | V4910 | 250 | FULLY CURED |

Based on the above results, it can be seen that all of the commercial coupling agents did compromise the cure speed of Formulation A at levels of 1 pph. However, only formulations containing E6250 could not be cured under any of the conditions evaluated.

### Example V

Each of the commercially available coupling agents which did not prevent curing of Formulation A at 250 mJ/cm² dose were evaluated for their effect on adhesion under ambient, 95% relative humidity, and immersion conditions as described above. In each case, the formulations were cured at 250 mJ/cm² at ambient temperature. The results are given in the following table.

**Table 2**

| | Coupling Agent | 180° Peel Test Results mN/cm (Grams/Inch) | | |
|---|---|---|---|---|
| Sample | | Ambient^{(a)} | 95% RH^{(b)} | Immersion^{(c)} |
| 19 | (NONE) | 521 (135) | --- | --- |
| 20 | (NONE) | 463 (120) | --- | --- |
| 21 | (NONE) | --- | 60 (15) | --- |
| 22 | (NONE) | --- | 39 (10) | --- |
| 23 | (NONE) | --- | --- | 19 (5) |
| 24 | (NONE) | --- | --- | 19 (5) |
| | | | | |
| 25 | AO564 | 1430 (370) | --- | --- |
| 26 | AO564 | 1890 (490) | --- | --- |
| 27 | AO564 | --- | 310 (80) | --- |
| 28 | AO564 | --- | 310 (80) | --- |
| 29 | AO564 | --- | --- | 39 (10) |
| 30 | AO564 | --- | --- | 77 (20) |
| | | | | |
| 31 | G6710 | 753 (195) | --- | --- |
| 32 | G6710 | 3030 (785) | --- | --- |
| 33 | G6710 | --- | (35) | --- |
| 34 | G6710 | --- | 560 (145) | --- |
| 35 | G6710 | --- | --- | 19 (5) |
| 36 | G6710 | --- | --- | 174 (45) |
| | | | | |
| 37 | G6720 | 521 (135) | --- | --- |
| 38 | G6720 | 3010 (780) | --- | --- |
| 39 | G6720 | --- | 444 (115) | --- |
| 40 | G6720 | --- | 1853 (480) | --- |
| 41 | G6720 | --- | --- | 39 (10) |
| 42 | G6720 | --- | --- | 19 (5) |
| | | | | |
| 43 | V4910 | 656 (170) | --- | --- |
| 44 | V4910 | 811 (210) | --- | --- |
| 45 | V4910 | --- | 251 (65) | --- |
| 46 | V4910 | --- | 309 (80) | --- |
| 47 | V4910 | --- | --- | 39 (10) |
| 48 | V4910 | --- | --- | 39 (10) |
| | | | | |
| 49 | M85550 | --- | 60 (15) | --- |

| | | | | |
|---|---|---|---|---|
| (a) Exposure to Ambient room conditions (temperature of 22 - 24°C, 42 - 51% RH) for 1 day prior to testing. | | | | |
| (b) Exposure to 95% RH at ambient room temperature for 1 day prior to testing. | | | | |
| (c) Testing performed after immersion in water at room temperature for 1 day. | | | | |

The results of these evaluations showed that A0564 gave the most consistent improvement in adhesion. Coupling agents G6710 and G6720 gave some higher adhesion values than A0564, but the results were not as consistent. Furthermore, both G6710 and G6720 caused discoloration in the cured formulations.

### Example VI

The preferred commercial coupling agent (A 0564) from Example V was compared with vinyl ether urethane siloxanes of the invention. In these tests, Formulation D (ester based) was used and the samples were cured using 250 mJ/cm² radiation dose at a temperature of 60°C. The results of these tests are shown in the following table.

**Table 3**

| **SAMPLE** | **COUPLING AGENT** | **RESULTS** |
|---|---|---|
| 50 | (NONE) | FULLY CURED |
| 51 | HBVE/Si | FULLY CURED |
| 52 | HEVE/Si | FULLY CURED |
| 53 | CHMVE/Si | FULLY CURED |
| 54 | A0564 | FULLY CURED |
| 164 | HDMVE/Si | FULLY CURED |

The results of these studies showed that the new coupling agents, did not appear to significantly compromise the cure speed of Formulation D. Commercially available coupling agent A0564 likewise did not compromise cure speed.

### Example VII

The representative coupling agents of Example VI, A0564 and CHMVE/Si were tested for their ability to improve adhesion of Formulation B to glass. The concentration of CHMVE/Si was varied. All samples were used with 250 mJ/cm² at 60°C. The results are shown in the following table.

**Table 4**

| | Coupling Agent | Level | 180° Peel Test Results mN/cm (Grams/Inch) | | |
|---|---|---|---|---|---|
| Sample | | PPH | Ambient^{(a)} | 95% RH^{(b)} | Immersion^{(c)} |
| 55 | (None) | --- | 598 (155) | --- | --- |
| 56 | (None) | --- | --- | 19 (5) | --- |
| | | | | | |
| 57 | A0564 | 1.0 | 695 (180) | --- | --- |
| 58 | A0564 | 1.0 | --- | 290 (75) | --- |
| | | | | | |
| 59 | CHMVE/Si | 0.25 | 1290 (335) | --- | --- |
| 60 | CHMVE/Si | 0.25 | --- | 290 (75) | --- |
| 61 | CHMVE/Si | 0.50 | 1620 (420) | --- | --- |
| 62 | CHMVE/Si | 0.50 | --- | 598 (155) | --- |
| 63 | CHMVE/Si | 0.75 | --- | --- | 35 (9) |
| 64 | CHMVE/Si | 0.75 | 1620 (420) | --- | --- |
| 65 | CHMVE/Si | 0.75 | --- | 869 (225) | --- |
| 66 | CHMVE/Si | 1.0 | 1640 (425) | --- | --- |
| 67 | CHMVE/Si | 1.0 | --- | 695 (180) | --- |
| 68 | CHMVE/Si | 1.0 | --- | --- | 54 (14) |
| 69 | CHMVE/Si | 2.0 | --- | --- | 297 (77) |
| 70 | CHMVE/Si | 4.0 | --- | --- | 510 (132) |

| | | | | | |
|---|---|---|---|---|---|
| (a) Exposure to Ambient room conditions (temperature of 22 - 24°C, 42 - 51% RH) for 1 day prior to testing. | | | | | |
| (b) Exposure to 95% RH at ambient room temperature for 1 day prior to testing. | | | | | |
| (c) Testing performed after immersion in water at room temperature for 3 days. | | | | | |

The results of these evaluations clearly demonstrate that the new coupling agent CHMVE/Si provided superior improvement in adhesion to glass plates compared to commercially available coupling agent A0564.

### Example VIII

The new coupling agent CHMVE/Si was tested in Formulation C at varying curing conditions using various concentrations of both the coupling agent and the photoinitiator. The results are given in the following table. The adhesion testing was carried out at ambient conditions.

**Table 5**

| | | | | | 180° Peel Test Results | |
|---|---|---|---|---|---|---|
| | CHMVE/Si | Initiator⁽a) | Cure Dose | Temp | Ambient^{(b)} mN/cm (Grams/Inch) | |
| Sample | Level,PPH | Level,PPH | mJ/cm² | °C | 1 Day | 7 Days |
| 71 | 0 | 0.8 | 250 | 60 | 309 (80) | --- |
| 72 | 0 | 0.8 | 250 | 60 | --- | 251 (65) |
| | | | | | | |
| 73 | 0.5 | 0.8 | 250 | 60 | 695 (180) | --- |
| 74 | 0.5 | 0.8 | 60 | | --- | 463 (120) |
| | | | | | | |
| 75 | 1.0 | 0.8 | 250 | 60 | 830 (215) | --- |
| 76 | 1.0 | 0.8 | 250 | 60 | --- | 656 (170) |
| | | | | | | |
| 77 | 2.0 | 0.8 | 250 | 60 | 1080 (280) | --- |
| 78 | 2.0 | 0.8 | 250 | 60 | --- | 907 (235) |
| | | | | | | |
| 79 | 3.0 | 0.8 | 250 | 60 | 849 (220) | --- |
| 80 | 3.0 | 0.8 | 250 | 60 | --- | 714 (185) |
| | | | | | | |
| 81 | 4.0 | 0.8 | 250 | 60 | 1120 (290) | --- |
| 82 | 4.0 | 0.8 | 250 | 60 | --- | 849 (220) |
| | | | | | | |
| 83 | 0.5 | 0.8 | 250 | 100 | --- | 501 (130) |
| | | | | | | |
| 84 | 2.0 | 0.8 | 250 | 100 | --- | 772 (200) |
| | | | | | | |
| 85 | 0.5 | 0.4 | 150 | 100 | 1830 (475) | --- |
| 86 | 0.5 | 0.4 | 150 | 100 | --- | 2060 (535) |
| | | | | | | |
| 87 | 2.0 | 0.4 | 150 | 100 | 1620 (420) | --- |
| 88 | 2.0 | 0.4 | 150 | 100 | --- | 1350 (350) |
| | | | | | | |
| 89 | 3.0 | 0.4 | 150 | 100 | 2140 (555) | --- |
| 90 | 3.0 | 0.4 | 150 | 100 | --- | 888 (230) |
| | | | | | | |
| 91 | 0 | 0.4 | 250 | 100 | 463 (120) | --- |
| 92 | 0 | 0.4 | 250 | 100 | --- | 386 (100) |
| | | | | | | |
| 93 | 0.5 | 0.4 | 250 | 100 | 791 (205) | --- |
| 94 | 0.5 | 0.4 | 250 | 100 | --- | 849 (220) |
| | | | | | | |
| 95 | 1.0 | 0.4 | 250 | 100 | 1620 (420) | --- |
| 96 | 1.0 | 0.4 | 250 | 100 | --- | 2100 (545) |
| | | | | | | |
| 97 | 2.0 | 0.4 | 250 | 100 | 1470 (380) | --- |
| 98 | 2.0 | 0.4 | 250 | 100 | --- | 1510 (390) |
| 99 | 3.0 | 0.4 | 250 | 386 (100) | 733 (190) | --- |
| 100 | 3.0 | 0.4 | 250 | 386 (100) | --- | 907 (235) |
| | | | | | | |
| 101 | 4.0 | 0.4 | 250 | 386 (100) | 1020 (265) | --- |
| 102 | 4.0 | 0.4 | 250 | 386 (100) | --- | 1020 (265) |

| | | | | | | |
|---|---|---|---|---|---|---|
| (a) Union Carbide UVI-6974. | | | | | | |
| (b) Exposure to Ambient room conditions (temperature of 22 - 24°C, 42 - 51% RH) for number of days specified prior to testing. | | | | | | |

The results of these samples clearly demonstrate that the incorporation of CHMVE/Si into vinyl ether based formulations improves ambient adhesion to glass under a variety of curing conditions. The best results were obtained when lower photocationic initiator levels and lower cure doses were used (Samples 85 - 90).

### Example IX

Further testing was carried out using CHMVE/Si as a coupling agent using Formulation C. The adhesion was measured after water immersion. The results are shown in the following table.

**Table 6**

| | | | | 180° Peel Test Results | | | |
|---|---|---|---|---|---|---|---|
| | CHMVE/Si | Initiator | Cure Dose | Cure Temp | Immersion^{(b)} mN/cm (Grams/Inch) | | |
| Sample | Level,PPH | Level,PPH | mJ/cm² | °C | 1 day | 7 days | 14 days |
| 103 | 0 | 0.8 | 250 | 60 | 0 | --- | --- |
| 104 | 0 | 0.8 | 250 | 60 | --- | 0 | --- |
| 105 | 0 | 0.8 | 250 | 60 | --- | --- | 19 (5) |
| | | | | | | | |
| 106 | 0.5 | 0.8 | 250 | 60 | 58 (15) | --- | --- |
| 107 | 0.5 | 0.8 | 250 | 60 | --- | 39 (10) | --- |
| 108 | 0.5 | 0.8 | 250 | 60 | --- | --- | 58 (15) |
| | | | | | | | |
| 109 | 1.0 | 0.8 | 250 | 60 | 58 (15) | --- | --- |
| 110 | 1.0 | 0.8 | 250 | 60 | --- | 39 (10) | --- |
| 111 | 1.0 | 0.8 | 250 | 60 | --- | --- | 39 (10) |
| | | | | | | | |
| 112 | 2.0 | 0.8 | 250 | 60 | 58 (15) | --- | --- |
| 113 | 2.0 | 0.8 | 250 | 60 | --- | 39 (10) | --- |
| 114 | 2.0 | 0.8 | 250 | 60 | --- | --- | 39 (10) |
| | | | | | | | |
| 115 | 3.0 | 0.8 | 250 | 60 | 77 (20) | --- | --- |
| 116 | 3.0 | 0.8 | 250 | 60 | --- | 19 (5) | --- |
| 117 | 3.0 | 0.8 | 250 | 60 | --- | --- | 39 (10) |
| | | | | | | | |
| 118 | 4.0 | 0.8 | 250 | 60 | 347 (90) | --- | --- |
| 119 | 4.0 | 0.8 | 250 | 60 | --- | 425 (110) | --- |
| 120 | 4.0 | 0.8 | 250 | 60 | --- | --- | 637 (165) |
| | | | | | | | |
| 121 | 0.5 | 0.8 | 250 | 100 | 193 (50) | --- | --- |
| 122 | 0.5 | 0.8 | 250 | 100 | --- | 135 (35) | --- |
| 123 | 0.5 | 0.8 | 250 | 100 | --- | --- | 116 (30) |
| | | | | | | | |
| 124 | 2.0 | 0.8 | 250 | 100 | 77 (20) | --- | --- |
| 125 | 2.0 | 0.8 | 250 | 100 | --- | 19 (5) | --- |
| 126 | 2.0 | 0.8 | 250 | 100 | --- | --- | 19 (5) |
| | | | | | | | |
| 127 | 0.5 | 0.4 | 150 | 100 | 1650 (430) | --- | --- |
| 128 | 0.5 | 0.4 | 150 | 100 | --- | 1810 (470) | --- |
| 129 | 0.5 | 0.4 | 150 | 100 | --- | --- | 1990 (515) |
| | | | | | | | |
| 130 | 2.0 | 0.4 | 150 | 100 | 869 (225) | --- | --- |
| 131 | 2.0 | 0.4 | 150 | 100 | --- | 888 (230) | --- |
| 132 | 2.0 | 0.4 | 150 | 100 | --- | --- | 984 (255) |
| | | | | | | | |
| 133 | 3.0 | 0.4 | 150 | 100 | 425 (110) | --- | --- |
| 134 | 3.0 | 0.4 | 150 | 100 | --- | 502 (130) | --- |
| 135 | 3.0 | 0.4 | 150 | 100 | --- | --- | 1160 (300) |
| | | | | | | | |
| 136 | 0 | 0.4 | 250 | 100 | 77 (20) | --- | --- |
| 137 | 0 | 0.4 | 250 | 100 | --- | 58 (15) | --- |
| 138 | 0 | 0.4 | 250 | 100 | --- | --- | 39 (10) |
| | | | | | | | |
| 139 | 0.5 | 0.4 | 250 | 100 | 656 (170) | --- | --- |
| 140 | 0.5 | 0.4 | 250 | 100 | --- | 521 (135) | --- |
| 141 | 0.5 | 0.4 | 250 | 100 | --- | --- | 695 (180) |
| | | | | | | | |
| 142 | 1.0 | 0.4 | 250 | 100 | 540 (140) | --- | --- |
| 143 | 1.0 | 0.4 | 250 | 100 | --- | 598 (155) | --- |
| 144 | 1.0 | 0.4 | 250 | 100 | --- | --- | 425 (110) |
| | | | | | | | |
| 145 | 2.0 | 0.4 | 250 | 100 | 502 (130) | --- | --- |
| 146 | 2.0 | 0.4 | 250 | 100 | --- | 444 (115) | --- |
| 147 | 2.0 | 0.4 | 250 | 100 | --- | --- | 135 (35) |
| | | | | | | | |
| 148 | 3.0 | 0.4 | 250 | 100 | 290 (75) | --- | --- |
| 149 | 3.0 | 0.4 | 250 | 100 | --- | 270 (70) | --- |
| 150 | 3.0 | 0.4 | 250 | 100 | --- | --- | 232 (60) |
| | | | | | | | |
| 151 | 4.0 | 0.4 | 250 | 100 | 1220 (315) | --- | --- |
| 152 | 4.0 | 0.4 | 250 | 100 | --- | 849 (220) | --- |
| 153 | 4.0 | 0.4 | 250 | 100 | --- | --- | 791 (205) |
| | | | | | | | |
| 154 | 0.5 | 0.4 | 500 | 100 | 232 (60) | --- | --- |
| 155 | 0.5 | 0.4 | 500 | 100 | --- | 154 (40) | --- |
| | | | | | | | |
| 156 | 1.0 | 0.4 | 500 | 100 | 39 (10) | --- | --- |
| 157 | 1.0 | 0.4 | 500 | 100 | --- | 97 (25) | --- |
| | | | | | | | |
| 158 | 2.0 | 0.4 | 500 | 100 | 39 (10) | --- | --- |
| 159 | 2.0 | 0.4 | 500 | 100 | --- | 386 (100) | --- |
| | | | | | | | |
| 160 | 3.0 | 0.4 | 500 | 100 | 39 (10) | --- | --- |
| 161 | 3.0 | 0.4 | 500 | 100 | --- | 116 (30) | --- |
| | | | | | | | |
| 162 | 4.0 | 0.4 | 500 | 100 | 212 (55) | --- | --- |
| 163 | 4.0 | 0.4 | 500 | 100 | --- | 154 (40) | --- |

| | | | | | | | |
|---|---|---|---|---|---|---|---|
| (a) Union Carbide UVI-6974. (b) Testing performed after immersion in water at room temperature for thenumber of days specified. | | | | | | | |

The results of these samples clearly demonstrate that the incorporation of CHMVE/Si into vinyl ether based formulations improves wet immersion adhesion to glass under a variety of curing conditions. The best results were obtained when lower photocationic initiator levels and lower cure doses were used (Samples 127 - 135).

### Example X

Improvement in dry adhesion can be obtained as well. Two of the new coupling agents were mixed with Formulation B and cured using a radiation dose of 250 mJ/cm² at a temperature of 80°C. The results are given in the following table.

**Table 7**

| | | | 180° Peel Test^{(a)} |
|---|---|---|---|
| Sample | Coupling Agent | Level,pph | 1 Day, Dry mN/cm (grams/inch) |
| 55 | None | - | 598 (155) |
| 165 | CHMVE/Si | 1.5 | 849 (220) |
| 166 | HDMVE/Si | 1.5 | 965 (250) |

| | | | |
|---|---|---|---|
| (a) exposure to ambient conditions of 22-24°C at 42-51% relative humidity for 1 day before testing | | | |

## Claims

1. A vinyl ether-containing composition polymerizable by actinic, gamma ray, or electron beam radiation comprising:
(a) an oligomer or a mixture of oligomers which are monofunctional, multi-functional, or a mixture of both monofunctional and multifunctional and which have a reactive functionality chosen from the group consisting of epoxy, acrylate, vinyl ether, maleate, or mixtures thereof;
(b) monomers which are monofunctional,, multifunctional, or a mixture of both monofunctional and multifunctional monomers and which have a reactive functionality chosen from the group consisting of epoxy, acrylate, vinyl ether, maleate, or mixtures thereof, wherein at least one of (a) or (b) must contain a vinyl ether functionality;
(c) a photoinitiator with an optional sensitizer, said photoinitiator which is chosen from the group consisting of a cationic photoinitiator and a radical photoinitiator, and
(d) a thermal oxidation stabilizer;
(e) a coupling agent comprising a vinyl ether urethane siloxane; and one or more additives selected from the group consisting of:
(f) a light screen;
(g) a color stabilizer;
(h) a blocking stabilizer; and
(i) a hydrogen stabilizer.

2. The composition of Claim 1 wherein the oligomer (a) comprises a urethane which is the reaction product of (i) at least one hydroxyl-terminated macropolyol (ii) a diisocyanate, and (iii) a hydroxy-containing functional group polymerizable by actinic, gamma ray, or electron beam radiation chosen from the group consisting of epoxy, acrylate, vinyl ether, maleate, or mixtures thereof.

3. The composition of Claim 1 wherein the oligomer (a) comprises a polyester which is the reaction product of (i) a polyol containing at least two terminal and/or pendant hydroxyl groups, (ii) a polybasic ester, and (iii) a hydroxy-containing functional group polymerizable by actinic, gamma ray, or electron beam radiation chosen from the group consisting of epoxy, acrylate, vinyl ether, maleate, or mixtures thereof.

4. The composition of Claim 1 wherein (b) is a vinyl ether terminated ester monomer having the structure: 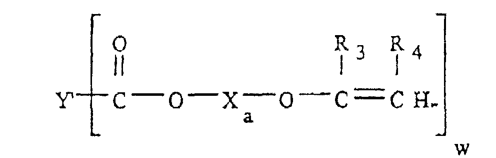 wherein w is an integer from 1 to 4 indicating the number of substitutents of Y', Y' is a mono-, di-, tri-, or tetrafunctional radical having a molecular weight of 15 to 500 and is independently selected from the group consisting of alkylene, arylene, aralykylene, and cycloalkylene radicals, Xₐ is a divalent radical having a molecular weight of 25 to 500, each Xₐ being independently selected from the group consisting of alkylene or cycloalkylene radicals, and R₃ and R₄ are monovalent radicals which are independently selected from the group consisting of hydrogen and alkyl groups having 1-10 carbon atoms.

5. The compositions of claim 1 wherein (b) is a vinyl ether terminated ether monomer with the structure: 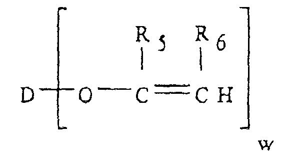 wherein w is an integer from 1 to 4 indicating the number of substituents of D, R₅ and R₆ are monovalent radicals which are independently selected from the group consisting of hydrogen and alkyl groups having 1-10 carbon atoms, and D is a mono-, di-, tri-, or tetravalent radical consisting of alkyl, cyclalkyl, or aryl ethers having a molecular weight of 56 to 1000.

6. A composition of Claim 1 wherein the vinyl ether urethane siloxane of the coupling agent is a reaction product of a trialkoxy silane which has an isocyanate functionality with a hydroxy mono vinyl ether.

7. A composition of Claim 6 wherein the hydroxy mono vinyl ether is selected from the group consisting of 4-hydroxy butyl vinyl ether, 2-hydroxy ethyl vinyl ether, 6-hydroxyhexyl vinyl ether, diethylene glycol monovinyl ether, and bydroxy methyl cyclohexyl methyl vinyl ether.

8. A composition of Claim 6 wherein the trialkoxy silane is 3-isocyanato propyl triethoxy silane.

## Patentansprüche

1. Durch aktinische Strahlung, gamma-Strahlung oder Elektronenstrahlung polymerisierbare vinyletherhaltige Zusammensetzung, enthaltend:
(a) ein Oligomer oder ein Gemisch von Oligomeren, bei denen es sich um monofunktionelle Oligomere, multifunktionelle Oligomere oder ein Gemisch aus mono- und multifunktionellen Oligomeren handeln kann und die eine reaktive Funktionalität aus der Gruppe bestehend aus Epoxid, Acrylat, Vinylether, Maleat oder deren Gemischen aufweisen;
(b) Monomere, bei denen es sich um monofunktionelle Monomere, multifunktionelle Monomere oder ein Gemisch aus mono- und multifunktionellen Monomeren handeln kann und die eine reaktive Funktionalität aus der Gruppe bestehend aus Epoxid, Acrylat, Vinylether, Maleat oder deren Gemischen aufweisen, mit der Maßgabe, daß mindestens eine der Komponenten (a) oder (b) eine Vinyletherfunktionalität enthält;
(c) einen Photoinitiator aus der Gruppe bestehend aus einem kationischen Photoinitiator und einem radikalischen Photoinitiator, gegebenenfalls mit einem Sensibilisator, sowie
(d) einen Stabilisator gegenüber thermischer Oxidation;
(e) ein Kupplungsmittel, enthaltend ein Vinyletherurethansiloxan; und ein oder mehrere Additive aus der Gruppe bestehend aus:
(f) einem Lichtfilter;
(g) einem Farbstabilisator;
(h) einem Blockstabilisator und
(i) einem Wasserstoffstabilisator.

2. Zusammensetzung nach Anspruch 1, bei der das Oligomer (a) ein Urethan enthält, bei dem es sich um das Produkt der Umsetzung von (i) mindestens einem hydroxylgruppenterminierten Makropolyol, (ii) einem Diisocyanat und (iii) einer durch aktinische Strahlung, gamma-Strahlung oder Elektronenstrahlung polymerisierbaren hydroxylgruppenhaltigen funktionellen Gruppe aus der Gruppe bestehend aus Epoxid, Acrylat, Vinylether, Maleat oder deren Gemischen handelt.

3. Zusammensetzung nach Anspruch 1, bei der das Oligomer (a) einen Polyester enthält, bei dem es sich um das Produkt der Umsetzung von (i) einem Polyol mit mindestens zwei end- oder seitenständigen Hydroxylgruppen, (ii) einem polyfunktionellen Ester und (iii) einer durch aktinische Strahlung, gamma-Strahlung oder Elektronenstrahlung polymerisierbaren hydroxylgruppenhaltigen funktionellen Gruppe aus der Gruppe bestehend aus Epoxid, Acrylat, Vinylether, Maleat oder deren Gemischen handelt.

4. Zusammensetzung nach Anspruch 1, bei der es sich bei (b) um ein vinylethergruppenterminiertes Estermonomer mit der Struktur: 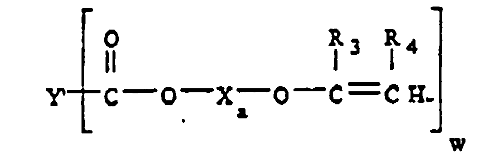 worin w für eine ganze Zahl von 1 bis 4 steht und die Zahl der Substituenten von Y' angibt, Y' für einen mono-, di-, tri- oder tetrafunktionellen Rest mit einem Molekulargewicht von 15 bis 500 steht und unabhängig aus der Gruppe bestehend aus Alkylen-, Arylen-, Aralkylen- und Cycloalkylenresten ausgewählt ist, Xₐ für einen zweiwertigen Rest mit einem Molekulargewicht von 25 bis 500 steht und jeweils unabhängig aus der Gruppe bestehend aus Alkylen- oder Cycloalkylenresten ausgewählt ist, und R₃ und R₄ für einwertige Reste stehen, die unabhängig voneinander aus der Gruppe bestehend aus Wasserstoff und Alkylgruppen mit 1-10 Kohlenstoffatomen ausgewählt sind, handelt.

5. Zusammensetzung nach Anspruch 1, bei der es sich bei (b) um ein vinylethergruppenterminiertes Ethermonomer mit der Struktur: 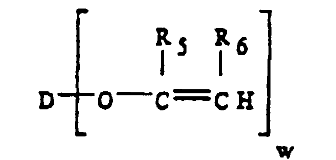 worin w für eine ganze Zahl von 1 bis 4 steht und die Zahl der Substituenten von D angibt, R₅ und R₆ für einwertige Reste stehen, die unabhängig voneinander aus der Gruppe bestehend aus Wasserstoff und Alkylgruppen mit 1-10 Kohlenstoffatomen ausgewählt sind, und D für einen mono-, di-, tri- oder tetrafunktionellen Rest bestehend aus Alkyl-, Cycloalkyl- oder Arylethern mit einem Molekulargewicht von 56 bis 1000 steht, handelt.

6. Zusammensetzung nach Anspruch 1, bei der es sich bei dem Vinyletherurethansiloxan des Kupplungsmittels um das Produkt der Umsetzung eines Trialkoxysilans mit einer Isocyanatfunktionalität und einem Hydroxymonovinylether handelt.

7. Zusammensetzung nach Anspruch 6, bei der der Hydroxymonovinylether aus der Gruppe bestehend aus 4-Hydroxybutylvinylether, 2-Hydroxyethylvinylether, 6-Hydroxyhexylvinylether, Diethylenglykolmonovinylether und Hydroxymethylcyclohexylmethylvinylether ausgewählt ist.

8. Zusammensetzung nach Anspruch 6, bei der es sich bei dem Trialkoxysilan um 3-Isocyanatopropyltriethoxysilan handelt.

## Revendications

1. Composition contenant un vinyléther polymérisable par rayonnement actinique, de rayons gamma ou d'un faisceau d'électrons comprenant :
(a) un oligomère ou un mélange d'oligomères qui sont monofonctionnels, multifonctionnels, ou un mélange d'à la fois des monofonctionnels et des multifonctionnels et qui ont une fonctionnalité réactive choisie dans le groupe comprenant un époxy, un acrylate, un vinyléther, un maléate, ou des mélanges de ceux-ci;
(b) des monomères qui sont monofonctionnels, multifonctionnels, ou un mélange d'à la fois des monomères monofonctionnels et multifonctionnels et qui ont une fonctionnalité réactive choisie dans le groupe comprenant un époxy, un acrylate, un vinyléther, un maléate, ou des mélanges de ceux-ci, dans laquelle au moins un de (a) ou (b) doit contenir une fonctionnalité vinyléther;
(c) un photoinitiateur avec un sensibilisateur facultatif, ledit photoinitiateur étant choisi dans le groupe comprenant un photoinitiateur cationique et un photoinitiateur radicalaire;
(d) un stabilisateur d'oxydation thermique;
(e) un agent de couplage comprenant un vinylétheruréthanesiloxane; et un ou plusieurs additifs sélectionnés dans le groupe comprenant
(f) un écran à la lumière;
(g) un stabilisateur de couleur;
(h) un stabilisateur bloquant; et
(i) un stabilisateur d'hydrogène.

2. Composition suivant la revendication 1, dans laquelle l'oligomère (a) comprend un uréthane qui est le produit réactionnel de (i) au moins un macropolyol à terminaison hydroxyle, (ii) un diisocyanate, et (iii) un groupement fonctionnel contenant un hydroxyle polymérisable par rayonnement actinique, de rayons gamma ou d'un faisceau d'électrons choisi dans le groupe comprenant un époxy, un acrylate, un vinyléther, un maléate, ou des mélanges de ceux-ci.

3. Composition suivant la revendication 1, dans laquelle l'oligomère (a) comprend un polyester qui est le produit réactionnel de (i) un polyol contenant au moins deux groupements hydroxyle terminaux et/ou pendants, (ii) un ester polybasique, et (iii) un groupement fonctionnel contenant un hydroxyle polymérisable par rayonnement actinique, de rayons gamma ou d'un faisceau d'électrons choisi dans le groupe comprenant un époxy, un acrylate, un vinyléther, un maléate, ou des mélanges de ceux-ci.

4. Composition suivant la revendication 1, dans laquelle (b) est un monomère ester à terminaison vinyléther ayant la structure : 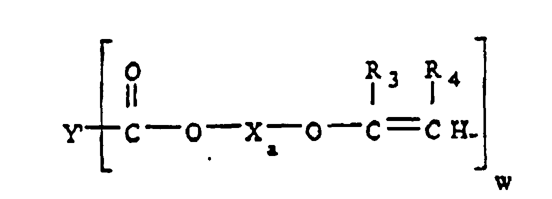 dans laquelle w est un entier de 1 à 4 indiquant le nombre de substituants de Y', Y' est un radical mono-, di-, tri- ou tétrafonctionnel ayant un poids moléculaire de 15 à 500 et est sélectionné indépendamment dans le groupe comprenant des radicaux alkylène, arylène, aralkylène et cycloalkylène, Xₐ est un radical divalent ayant un poids moléculaire de 25 à 500, chaque Xₐ étant sélectionné indépendamment dans le groupe comprenant des radicaux alkylène, ou cycloalkylène, et R₃ et R₄ sont des radicaux monovalents qui sont sélectionnés indépendamment dans le groupe comprenant un hydrogène et des groupements alkyle ayant 1-10 atomes de carbone.

5. Compositions de la revendication 1, dans lesquelles (b) est un monomère éther à terminaison vinyléther avec la structure : 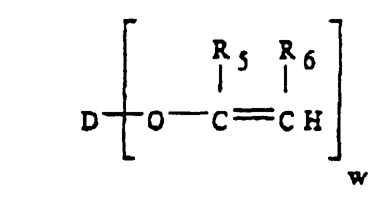 dans laquelle w est un entier de 1 à 4 indiquant le nombre de substituants de D, R₅ et R₆ sont des radicaux monovalents qui sont sélectionnés indépendamment dans le groupe comprenant un hydrogène et des groupements alkyle ayant 1-10 atomes de carbone, et D est un radical mono-, di-, tri- ou tétravalent comprenant des alkyléthers, des cycloalkyléthers ou des aryléthers ayant un poids moléculaire de 56 à 1000.

6. Composition suivant la revendication 1, dans laquelle le vinylétheruréthanesiloxane de l'agent de couplage est un produit réactionnel d'un trialcoxysilane qui a une fonctionnalité isocyanate avec un hydroxymonovinyléther.

7. Composition suivant la revendication 6, dans laquelle l'hydroxymonovinyléther est sélectionné dans le groupe comprenant du 4-hydroxybutylvinyléther, du 2-hydroxyéthylvinyléther, du 6-hydroxyhexylvinyléther, du diéthylèneglycolmonovinyléther et de l'hydroxyméthylcyclohexylméthylvinyléther.

8. Composition suivant la revendication 6, dans laquelle le trialcoxysilane est du 3-isocyanatopropyltriéthoxysilane.
